# EUROPÄISCHE PATENTANMELDUNG

(11) **EP 3 133 451 A1**
(43) Veröffentlichungstag der Anmeldung: **22.02.2017**
(21) Anmeldenummer: 15181755.8
(22) Anmeldetag: 20.08.2015
(51) Int. Cl.: G05B 23/02

(54) **SYSTEM ZUM STEUERN, ÜBERWACHEN UND REGELN VON VERFAHREN ZUM BETRIEB EINES SOLCHEN SYSTEMS**

(71) Anmelder: Siemens Aktiengesellschaft, 80333 München (DE)
(72) Erfinder: Adler, Michael, 90469 Nürnberg (DE); Brill, Roland, 91056 Erlangen (DE)

(57) **Zusammenfassung**

Die Erfindung betrifft ein System zum Steuern, Überwachen und Regeln von Prozessen in industriellen Anlagen, wobei eine geschlossene Rückkopplungsschleife vorgesehen ist, umfassend:
- eine automatisiert konfigurierbare, zentrale Datenerfassung zur Erfassung der auf Kundenseite von den industriellen Anlagen erzeugten Betriebsparameter im Feld,
- eine erste Kommunikationsverbindung vom Feld zu einer zentralen Datenauswertungseinheit zur Übersendung der Daten,
- in der zentralen Datenauswertungseinheit zumindest eine zentralisierte Daten-Sammlungseinheit und/oder zumindest ein statistisches Datenauswertungsmodul,
- zumindest ein Generierungsmodul in der zentralen Datenauswertungseinheit zur Generierung von Ergebnissen, insbesondere für die Anlagenoptimierung/Prozesserweiterung und/oder Optimierung notwendiger Wartungsarbeiten,
- zumindest ein Erstellungsmodul in der zentralen Datenauswertungseinheit zum Erstellen von neuen Zielparametern durch automatisierte Anpassung der Betriebsparameter auf Basis der Ergebnisse,
- eine zweite Kommunikationsverbindung von der zentralen Datenauswertung zurück ins Feld zur Übersendung und Einstellung der industriellen Anlagen.

Weiterhin betrifft die Erfindung ein Verfahren zum Betrieb eines solchen Systems.

## Beschreibung

Die Erfindung betrifft ein System zum Steuern, Überwachen und Regeln von Prozessen in industriellen Anlagen umfassend einer erfindungsgemäßen geschlossenen Rückkopplungsschleife. Weiterhin betrifft die Erfindung ein Verfahren zum Betrieb eines solchen Systems.

Für industrielle Anlagen zur Erzeugung oder Verarbeitung von Gütern oder Energie besteht seit jeher ein Bedürfnis nach einem Leitsystem, das eine optimale und dabei insbesondere kostengünstige Führung des in der Anlage durchgeführten Prozesses ermöglicht. Diesem Bedürfnis wurde bisher suboptimal durch Einrichtungen der konventionellen Regeltechnik soweit wie möglich Rechnung getragen. Insbesondere bei Produktionsprozessen, die große regeltechnische Probleme mit sich bringen, steigt jedoch der notwendige regeltechnische Aufwand enorm an, ohne dass das erreichte Ergebnis wirklich zufriedenstellend ist.

Geräte, die bei Kunden in den Anlagen tagtäglich produktiv laufen, sind sehr oft nicht optimal eingestellt. Somit ist ein Optimum an Verfügbarkeit, Produktivität und Ressourceneffizienz kaum zu erreichen. Die Verfügbarkeit kann gesteigert werden, indem Ausfallzeiten wegen z.B. Materialverschleiß vermieden werden. Das kann z.B. dadurch erreicht werden, dass die Geräte nur in bekannt optimalen Bedingungen betrieben werden (z.B. tägliche Betriebsstunden, max. Drehzahl, optimale Temperatur).

Produktivität kann gesteigert werden, indem man notwendige Wartungsarbeiten, z.B. den Austausch von Verschleißteilen, in Zeiten plant, in denen die Maschine oder Anlage ohnehin stillstehen würde. Dies ist im Wesentlichen an Betriebsschließungen, am Wochenende und in der Nacht. Hier ist es wesentlich zu wissen, wann eine Maschine gewartet werden muss, basierend auf den tatsächlichen Betriebsstunden und der Betriebsart. Eine klassische Wartung nach festen Wartungsintervallen findet typischerweise öfter statt als technisch nötig wäre. Somit ist der Hersteller auf der sicheren Seite.

Ressourceneffizienz kann gesteigert werden, indem man z.B. Arbeitsabläufe optimiert, weniger Material verbraucht, weniger Energie verbraucht. Letzteres kann z.B. erreicht werden, indem man detaillierte Kenntnisse über Energiekosten, Laufzeiten der Maschinen und vorausschauend benötigte Laufzeiten der Maschinen pro Tag kombiniert, um so den Energieverbrauch über den Tag zu verteilen und teure Lastspitzen zu vermeiden.

Historische und aktuelle (Mess-)Daten der Maschinen aus dem Feld können statistisch relevante Hinweise auf Entwicklungen und künftige Ereignisse in den o.g. Szenarien geben, z.B. Daten zu Lagererwärmung einer Maschine, einer Zugachse etc. können bei bekannter Belastung auf einen künftigen Ausfall hinweisen oder helfen, Wartungsintervalle zu optimieren. Je früher und je näher beim Kunden, also am Ort des Geschehens, diese Hinweise als Informationen vorliegen, umso besser kann pro-aktiv, d.h. vor einem Aus- oder Schadensfall, gehandelt werden. Zudem erlaubt eine breite Datenbasis aus anderen Anlagen mit ähnlichen Konfigurationen, Rückschlüsse für Optimierungen zu ziehen und so, bekanntes Wissen in konkrete Änderungen der Maschinenkonfiguration zu überführen, die die o.g. Qualitäten positiv beeinflussen.

Solche Mechanismen werden heute in manuellen oder teilautomatisierten Optimierungsprozessen betrieben. Eine voll automatische Parametrierung der Anlage, d.h. der Maschinen, auf Basis von automatischen Datenanalysen über viele Installationen hinweg, existiert jedoch noch nicht.

Bisher werden, wenn überhaupt, bestehende Anlagen in manuellen Verfahren optimiert. Dazu kann es z.B. eine Analyse vor Ort geben, aus der ein Beratungsbericht resultiert. Maßnahmen werden beschlossen und umgesetzt. Dieser Prozess ist langwierig, beruht meist auf empirischen Erkenntnissen und berücksichtigt die Analyse von anderen Installationen bestenfalls teilweise. Stand der Technik ist hierbei eine manuelle Erfassung von Statistiken zu Anlagenlaufzeiten, Ausfallzeiten, Materialverbrauch und Energieverbrauch. Diese Analysen basieren zwar auf statistischen Daten, sind jedoch immer noch manuell.

Es ist daher eine erste Aufgabe der Erfindung ein System für eine voll automatische Parametrierung der Anlage anzugeben. Eine zweite Aufgabe liegt in der Angabe eines Verfahrens für den Betrieb eines solchen Systems.

Die auf die Vorrichtung bezogene Aufgabe wird gelöst durch die Angabe eines Systems zum Steuern, Überwachen und Regeln von Prozessen in industriellen Anlagen, wobei eine geschlossene Rückkopplungsschleife vorgesehen ist, umfassend:
- eine automatisiert konfigurierbare, zentrale Datenerfassung zur Erfassung der auf Kundenseite, von den industriellen Anlagen erzeugten Betriebsparameter im Feld,
- eine erste Kommunikationsverbindung vom Feld zu einer zentralen Datenauswertungseinheit zur Übersendung der Daten,
- in der zentralen Datenauswertungseinheit zumindest eine zentralisierte Daten-Sammlungseinheit, insbesondere eine BigData-Sammlungseinheit und/oder zumindest ein statistisches Datenauswertungsmodul,
- zumindest ein Generierungsmodul in der zentralen Datenauswertungseinheit zur Generierung von Ergebnissen, insbesondere für die Anlagenoptimierung / Prozesserweiterung und/oder Optimierung notwendiger Wartungsarbeiten,
- zumindest ein Erstellungsmodul in der zentralen Datenauswertungseinheit zum Erstellen von neuen Zielparametern durch automatisierte Anpassung der Betriebsparameter auf Basis der Ergebnisse,
- eine zweite Kommunikationsverbindung von der zentralen Datenauswertung zurück ins Feld zur Übersendung und Einstellung der industriellen Anlagen durch die Zielparameter.

Die auf das Verfahren bezogene Aufgabe wird gelöst durch die Angabe eines Verfahrens zum Betrieb eines Systems zum Steuern, Überwachen und Regeln von Prozessen in industriellen Anlagen mit einer geschlossenen Rückkopplungsschleife mit den folgenden Schritten:
- Erfassung von Daten durch eine automatisiert konfigurierbare, zentrale Datenerfassung der auf Kundenseite, von den industriellen Anlagen, erzeugten Betriebsparameter im Feld,
- Verbinden vom Feld zu einer zentralen Datenauswertungseinheit durch eine erste Kommunikationsverbindung zur Übersendung der Daten,
- Sammeln und Auswerten der Daten in der zentralen Datenauswertungseinheit durch zumindest eine zentralisierte Daten-Sammlungseinheit, insbesondere eine BigData-Sammlungseinheit, und/oder zumindest einem statistischen Datenauswertungsmodul,
- Generieren von Ergebnissen, insbesondere für die Anlagenoptimierung/Prozesserweiterung und /oder Optimierung notwendiger Wartungsarbeiten, durch zumindest ein Generierungstool in der zentralen Datenauswertungseinheit,
- Erstellen von neuen Zielparametern durch automatisierte Anpassung der Betriebsparameter auf Basis der Ergebnisse durch zumindest ein Erstellungsmodul in der zentralen Datenauswertungseinheit,
- Übersenden der Zielparameter durch eine zweite Kommunikationsverbindung von der zentralen Datenauswertung zurück ins Feld und Einstellen der industriellen Anlagen anhand der Zielparameter.

Dabei kann mit Feld das Feld vor Ort gemeint sein. D.h. die zentrale Einheit befindet sich dabei auf dem Betriebsgelände des Anlagenbetreibers (on-premise). Auch kann jedoch die zentrale Einheit außerhalb des Betriebsgeländes des Anlagenbetreibers (z.B Cloud-basierte Systeme) installiert sein.

Es wurde erkannt, dass immer mehr Geräte über ihre Sensorik Daten bereitstellen können, die dann in großen Datenbanken gesammelt und durch Algorithmen automatisiert analysiert werden können. In diesem Umfeld gibt es einen breiten Markt von Big-Data Analyse-Plattformen. All diese Plattformen und Produkte stellen aber die Analyseergebnisse im Wesentlichen nur in Form von Berichten - teils interaktiv am PC, teils in Form von Dokumenten - dar. Entscheidungen werden von Menschen getroffen, automatische Prozesse, die die Analyseergebnisse verarbeiten und direkt in die Produktion bringen, sind noch nicht etabliert und vorhanden. Änderungen an den Maschinen und Anlagen werden noch immer manuell durchgeführt.

Dies wird durch die Erfindung nun vermieden. Das erfindungsgemäße System und Verfahren zum Betrieb dieses Systems beinhaltet eine geschlossene Rückkopplungsschleife. Damit ist es möglich, die aus den BigData-Analysen gewonnenen Erkenntnisse zur Optimierung bereits installierter Geräte und System im Feld zu nutzen, ohne Geräte vor Ort austauschen zu müssen oder lange manuelle Prozesse in Kauf nehmen zu müssen.

Die Optimierung eines einzelnen Gerätes/Systems erfolgt automatisiert mit möglichst wenig manuellen Eingriffen und auf Basis der Erkenntnisse auf der breiten statistischen Basis vieler Systeme. Vollzogene Optimierungen greifen vor Ort auch dann, wenn die erste und/oder zweite Kommunikationsverbindung zwischenzeitlich nicht verfügbar sein sollte, weil sie dauerhaft im Feld implementiert sind.

Die Automatisierung solcher Maschinenkonfigurationen durch das erfindungsgemäße System und das erfindungsgemäße Verfahren vermeidet erheblichen Aufwand für Engineering, Feineinstellung, Test und Roll-Out in den Anlagen. Im Kern der Sache geht es darum, Entscheidungen schnell und unverfälscht ins Feld zu bringen, stets aktuell zu halten, und langwierige manuelle Arbeiten für die Implementierung zu vermeiden. Die Automatisierung hat verschiedene geschäftlich relevante Effekte. Dies sind zum einen die Einsparung von Engineering für die Änderungen, eine frühere Nutzung von Optimierung und die Möglichkeit, Ressourcennutzung und Wirkungsgrad stets optimal zu halten. Zum anderen können die Wartungszeitfenster und Ausfallzeiten optimiert werden und menschliche Fehler bei der Nachregelung vermieden werden.

Es ist zu beachten, dass die zweite Kommunikationsverbindung und die erste Kommunikationsverbindung als eine einzelne Verbindung, welche in beide Richtungen funktioniert, ausgeführt sein kann.

In den Unteransprüchen sind weitere vorteilhafte Maßnahmen aufgelistet, die beliebig miteinander kombiniert werden können, um weitere Vorteile zu erzielen.

Bevorzugt umfasst die Datenerfassung eine Datenvorverdichtung. Auch kann die Datenerfassung eine Datenfilterung umfassen. Dabei kann die Datenerfassung, die Datenvorverdichtung und Datenfilterung durch Datensammlungs-Agenten realisiert werden. Dadurch kann die anschließende Analyse der Daten gesplittet werden. Diese kann somit zumindest teilweise als Vorverarbeitung im Feld stattfinden als auch in der nachfolgenden Datenauswertungseinheit.

Vorzugsweise ist eine erste Kommunikationsverbindung beim Kunden, insbesondere beim Kunden vor Ort, oder über das Internet vorgesehen. Dies kann z.B. eine Remote Service Plattform sein oder über GSM/UMTS/LTE-Mobilfunkverbindung erfolgen. Auch andere Techniken sind möglich.

In einer bevorzugten Ausgestaltung umfasst das Erstellungsmodul ein Entscheidungstool, durch welches eine erste Entscheidung über eine automatisierte oder manuelle Erzeugung von Aufträgen von Wartungsarbeiten oder eine zweite Entscheidung über eine automatisierte oder manuelle Erzeugung von geänderten Zielparametern generierbar ist und wobei dem Entscheidungstool ein Wartungstool und ein Konfigurationstool nachgeschaltet ist, wobei dem Wartungstool die erste Entscheidung zuführbar ist und dem Konfigurationstool die zweite Entscheidung zuführbar ist. Bevorzugt ist zudem ein Anlagenmodell zur automatisierten oder manuellen Erzeugung der geänderten Zielparameter vorgesehen. Dabei beinhaltet das Anlagenmodell das Wissen über die Anlagenkonfiguration.

Das heißt, das Entscheidungstool trifft nach dem Einlesen der Ergebnisse die Entscheidungen für die Zielanlagen. Aus den analysierten Ergebnissen müssen für die konkreten Anlagen, Anlagen-Teile oder Einzelmaschinen diese Entscheidungen abgeleitet werden. Dies erfolgt auf Grund von Regeln, die besagen, welche Entscheidungen das Entscheidungstool automatisch treffen kann und welche eine manuelle Bestätigung des Anlagenbetreibers benötigen. Dieser Schutz ist notwendig, um ggf. zu große Eingriffe kontrollieren zu können. Die Entscheidungen bedürfen ebenfalls eines detaillierten Wissens über den Zustand der Anlagenkonfiguration - es muss hier also bereits ein vollständiges Anlagenmodell, auch Maschinen-Modell genannt, vorhanden sein.

Im Wesentlichen werden zwei Entscheidungs-Typen unterschieden:
Die erste Entscheidung zum Erzeugung von Aufträgen für Wartungsarbeiten, welche dem Wartungstool zugeführt werden und die zweite Entscheidung zum Erzeugung und Einspielen von geänderten Maschinenkonfigurationen, welche einem Konfigurationstool zugeführt werden.

Bevorzugt umfasst das Wartungstool zumindest ein erstes Wartungsteiltool in dem die Wartungsaufträge generierbar sind, und ein dem ersten Wartungsteiltool nachgeschalteten zweiten Wartungsteiltool, in dem die Wartungsaufträge planbar und beauftragbar sind. Im ersten Wartungsteiltool sind hierzu einige Schnittstellen zu anderen Systemen notwendig, um z.B. in einem Warenwirtschaftssystem entsprechende Posten einzustellen, Bestellungen und Tickets zu verwalten etc.. Im zweiten Wartungsteiltool werden wiederum Schnittstellen zu anderen Systemen verwendet, um Wartungsaufträge zu beauftragen. Dazu ist ein detailliertes Wissen zu den Betriebszeiten der Zielanlage notwendig, um eine optimale Einsatzplanung mit minimalen Ausfallzeiten zu erreichen.

In einer bevorzugten Ausgestaltung umfasst das Konfigurationstool zumindest Generierungsvorschriften für die in der industriellen Anlage vorgesehenen Anlagenmaschinen. Weiterhin umfasst das Konfigurationstool bevorzugt zumindest ein erstes Konfigurationsteiltool, durch welches unter Verwendung der Generierungsvorschriften die Zielparameter, d.h. eine Zielkonfiguration generierbar sind. Zudem kann in bevorzugter Ausgestaltung das Konfigurationstool ein zweites Konfigurationsteiltool umfassen, wobei das zweite Konfigurationsteiltool vorab definierte Validierungsregeln aufweist, und wobei durch die Validierungsregeln die Zielparameter, d.h. die Zielkonfiguration validierbar ist. D.h., dass auf Basis der bereits vorhandenen Anlagenkonfiguration nun eine für jede Zielanlage spezifische Ziel-Konfiguration generiert wird. Dieser Schritt ist technisch anspruchsvoll, denn für jede Zielanlage muss ein automatisiertes Engineering möglich sein. Das bedingt ein Wissen über entsprechende Generierungsvorschriften, z. B. das genaue Format und Datenmodell der Konfiguration, passend für jede Zielanlage bzw. das in der Zielanlage zu steuernde Zielgerät. Um, für Güter und Menschen, inkonsistente oder gefährliche Kombinationen von Maschinenkonfiguration zu vermeiden, muss das generierte Ergebnis validiert werden. Dieser Schritt bedarf detaillierter Validierungsregeln, die zuvor festgelegt werden. An diesem Punkt wird durch Modelle und Simulationen der Nachweis erbracht, dass z.B. Anlagensicherheit gewährleistet ist. Hier spielen Normen und Richtlinien der jeweiligen Anlagenbetreiber eine Rolle.

In einem weiteren bevorzugten Ausführungsbeispiel weist das Konfigurationstool eine Konfigurationsverbindung auf, wodurch die Zielparameter, d.h. die Zielkonfiguration in die jeweilige Zielanlage ladbar ist. Dies kann z.B. auch die zweite Kommunikationsverbindung sein. Nach Übernahme der neuen Zielparameter bzw. Zielkonfiguration bestätigen die Zielanlage bzw. das jeweilige Gerät der Zielanlage den Vorgang in einer Art, dass sicher überprüft werden kann, dass die geplante Änderung erfolgreich stattgefunden hat und auf dem Weg nicht verändert wurde. Ist alles in Ordnung, fließt die neue Konfiguration zurück in das Anlagenmodell.

Bevorzugt wird durch eine Bestätigungsverbindung eine Bestätigung der Übernahme der Zielparameter, d.h. der Zielkonfiguration durch die Zielanlage gesendet. Diese Bestätigung kann z.B. an die zentrale Datenauswertungseinheit, an den Bediener z.B. durch SmartPhone oder an ein übergeordnetes Leitsystem etc. gesendet werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: das erfindungsgemäße System,
FIG 2: das erfindungsgemäße Entscheidungstool.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Beim sogenannten BigData-Ansatz werden die Daten in großen Mengen von möglichst vielen Kunden/Sites und über möglichste viele Anwendungsfälle hinweg zusammengeführt. Auf dem Gesamtdatenbestand wird anschließend nach Korrelationen gesucht und entsprechende Entscheidungs- und Optimierungsinformationen werden generiert. Erkenntnisse aus diesen Informationen fließen in zukünftige Produkte ein oder können als Dienstleistung an spezifische Kunden weitergegeben werden. Die im Stand der Technik installierten Maschinen/Anlagen im Feld werden bestenfalls manuell nachjustiert.

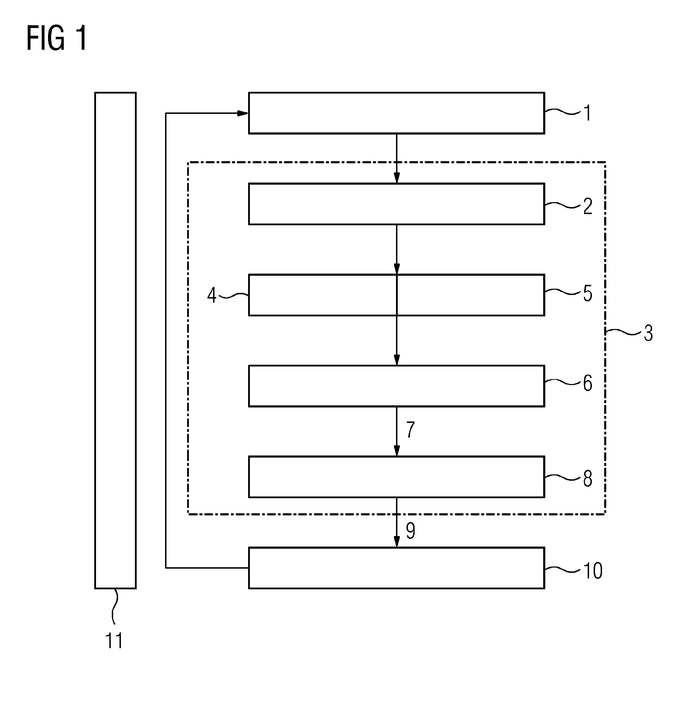

Dies wird durch die Erfindung nun vermieden. FIG 1 zeigt schematisch ein System zum Steuern, Überwachen und Regeln von Prozessen in industriellen Anlagen. Diese umfasst eine erfindungsgemäße Rückkopplungsschleife 11. Dabei umfasst die Rückkopplungsschleife 11 eine automatisiert konfigurierbare, zentrale Datenerfassung/-vorverdichtung/-filterung 1 zur Erfassung der auf Kundenseite, von den industriellen Anlagen erzeugten Betriebsparameter vor Ort im Feld. Dies kann mit Hilfe diverser Datensammlungs-Agenten realisiert werden. Die Analyse der Daten kann somit gesplittet werden und kann somit auch teilweise als Vorverarbeitung im Feld stattfinden.

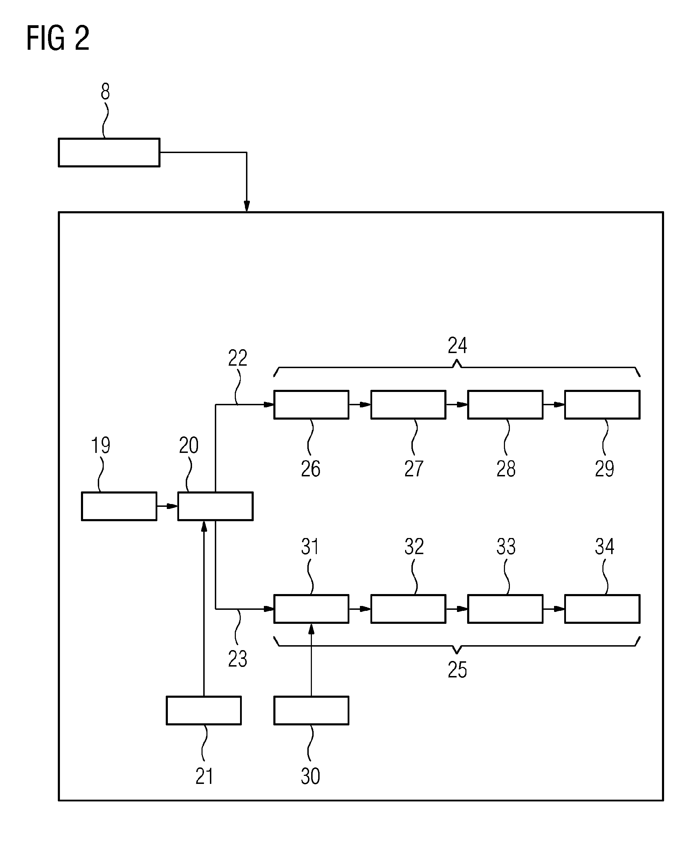

Diese Daten werden über eine erste Verbindung 2, welche vom Feld vor Ort zur zentralen Datenauswertungseinheit 3 geht. Dabei bedeutet vor Ort im Feld, dass sich die zentrale Einheit auf dem Betriebsgelände des Anlagenbetreibers (on-premise) befindet. Auch kann sich jedoch die zentrale Einheit außerhalb des Betriebsgeländes des Anlagenbetreibers (z.B. Cloud-basierte Systeme) befinden. Dabei umfasst die zentrale Datenauswertungseinheit 3 mindestens eine zentralisierte BigData-Sammlungseinheit 4 und ein statistisches Datenauswertungsmodul 5 der Daten. Die erste Kommunikationsverbindung 2 kann über eine GSM/UMTS/LTE-Mobilfunkverbindung und andere etablierte Techniken dafür realisiert sein. In der zentralisierten BigData-Sammlungseinheit 4 und dem statistischen Datenauswertungsmodul 5 wird eine Optimierung/Erweiterung der Prognosen vorgenommen. Auch ist in der zentralen Datenauswertungseinheit 3 ein Generierungsmodul 6 zur Generierung von Ergebnissen 7 für die Anlagenoptimierung/Prozesserweiterung und/oder Optimierung notwendiger Wartungsarbeiten vorgesehen. Dies ist quasi ein System zur Generation von Empfehlungen für die Anlagenoptimierung bzw. für notwendige Wartungsarbeiten. Weiterhin umfasst die zentrale Datenauswertungseinheit 3 zumindest ein Erstellungsmodul 8 zur Erstellung von neuen Zielparametern 9 durch automatisierte Anpassung der Betriebsparameter auf Basis der vorherigen Ergebnisse 7. Dies entspricht einer automatisierten Anpassung der Betriebsparameter bzw. der Datenerfassung/-vorverdichtung/-filterung 1 auf Basis der vorherigen Ergebnisse 7. Dies wird in FIG 2 noch genauer erläutert. Zudem ist eine zweite Kommunikationsverbindung 10 von der zentralen Datenauswertung 3 zurück ins Feld zur Übersendung und Einstellung der industriellen Anlagen durch die Zielparameter 9 vorhanden.

Das Gesamtsystem beinhaltet daher als eine Optimierungsschleife die geschlossene Rückkopplungsschleife 11. Damit ist es möglich, die aus den BigData-Analysen gewonnenen Erkenntnisse und Ergebnisse 7 zur Optimierung bereits installierter Geräte und System im Feld zu nutzen, ohne Geräte vor Ort austauschen zu müssen oder lange manuelle Prozesse in Kauf nehmen zu müssen. Die Optimierung des einzelnen Gerätes/Systems erfolgt automatisiert, mit möglichst wenig manuellen Eingriffen und auf Basis der Erkenntnisse und Ergebnisse 7 der breiten statistischen Auswertung. Vollzogene Optimierungen greifen vor Ort auch dann, wenn die erste 2 und/oder zweite 10 Kommunikationsverbindung zwischenzeitlich nicht verfügbar sein sollte, weil sie dauerhaft im Feld implementiert sind.

Die oben genannte Rückkopplungsschleife 11 kann als reine Software-Komponente realisiert werden.

Der wesentliche Schritt, das Erstellungsmodul 8 von neuen Zielparametern 9 durch automatisierte Anpassung der Betriebsparameter auf Basis der Ergebnisse 7, mittels dessen der geschlossener Regelkreis generierbar ist, soll hier in FIG 2 genauer erläutert werden.

Jeder Schritt in dieser Prozesskette ist ein technisches Merkmal (Komponente), welche im Verbund die Lösung des Problems darstellen:
Aus den Analyse-Ergebnissen 7 müssen für die konkreten Anlagen, Anlagen-Teile oder Einzelmaschinen Entscheidungen abgeleitet werden. Dazu muss das Erstellungsmodul 8 nun Entscheidungen für Zielanlagen treffen.

Das Erstellungsmodul 8 liest zunächst die Ergebnisse 7 (FIG 1)ein, 19. Das Erstellungsmodul 8 umfasst zudem ein Entscheidungstool 20. In dem Entscheidungstool 20 wird entweder eine erste Entscheidung 22 über eine automatisierte oder manuelle Erzeugung von Aufträgen von Wartungsarbeiten oder eine zweite Entscheidung 23 über eine automatisierte oder manuelle Erzeugung von geänderten Zielparametern 9 (FIG 1) getroffen. Dies erfolgt auf Grund von Regeln, die besagen, welche Entscheidungen das System automatisch treffen kann und welche eine manuelle Bestätigung des Anlagenbetreibers benötigen. Dieser Schutz ist notwendig, um ggf. zu große Eingriffe kontrollieren zu können. Die Entscheidungen 22,23 bedürfen ebenfalls eines detaillierten Wissens über den Zustand der Anlagenkonfiguration - es muss hier also bereits ein vollständiges Anlagenmodell 21, auch Maschinenmodell genannt, vorhanden sein. Dieses Anlagenmodell 21 wird dem Entscheidungstool 20 zugeführt.

Im Wesentlichen werden daher zwei Entscheidungs-Typen unterschieden:
- die Erzeugung von Aufträgen für Wartungsarbeiten (z.B. Tausch von Verschleißteilen),
- die Erzeugung und das Einspielen von geänderten Zielparametern 9.

Dem Entscheidungstool 20 ist ein Wartungstool 24 und Konfigurationstool 25 nachgeschaltet, wobei dem Wartungstool 24 die ersten Entscheidungen 22 zugeführt werden und dem Konfigurationstool 25 die zweiten Entscheidungen 23 zugeführt werden:
Das Wartungstool 24 umfasst dabei ein erstes Wartungsteiltool 26, dem die erste Entscheidung 22 nun zugeführt wird. In dem ersten Wartungsteiltool 26 sind nun die Wartungsaufträge generierbar. Hier werden einige Schnittstellen zu anderen Systemen notwendig um z.B. in einem Warenwirtschaftssystem entsprechende Posten einzustellen, Bestellungen und Tickets zu verwalten etc.

Dem ersten Wartungsteiltool 26 ist ein zweites Wartungsteiltool 27 nachgeschaltetes, in dem die nunmehr generierten Wartungsaufträge planbar und beauftragbar sind. Hier werden wiederum Schnittstellen zu anderen Systemen verwendet, um diese Wartungsaufträge zu beauftragen. Dazu ist ein detailliertes Wissen zu den Betriebszeiten der Zielanlage notwendig, um eine optimale Einsatzplanung mit minimalen Ausfallzeiten zu erreichen. Die anschließende Durchführung 28/Ausführung der Arbeiten, welche gegebenenfalls manuell durchgeführt werden, erfolgt dann durch Menschen (Service-Engineers). Nach Durchführung der Arbeit erfolgt eine Bestätigung des Service-Engineers. D.h. nach der Durchführung 28 erfolgt eine Bestätigung 29 der den Vollzug ins System zurückmeldet.

Wird durch das Entscheidungstool 20 eine zweite Entscheidung 23 getroffen, wird diese einem ersten Konfigurationsteiltool 31 zugeführt. Dieses enthält zumindest eine Generierungsvorschrift 30 für in der industriellen Anlage vorgesehene Anlagenmaschinen. Das heißt, dass im ersten Konfigurationsteiltool 31 die Anlagenkonfiguration durch die Zielparameter 9 (FIG 1) generiert wird. Auf Basis der bereits vorhandenen Anlagenkonfiguration werden nun für jede Zielanlage spezifische Zielparameter 9 (FIG 1) bzw. eine Zielkonfiguration generiert. Dieser Schritt ist technisch anspruchsvoll, denn für jede Zielanlage muss ein automatisiertes Engineering möglich sein. Das bedingt ein Wissen über entsprechende Generierungsvorschriften 30, z. B. das genaue Format und Datenmodell der Konfiguration, passend für die Zielanlage, d.h. die Komponente der Gesamtanlage.

Diese Zielparameter 9 (FIG 1) bzw. Zielkonfiguration wird nun einem zweiten Konfigurationsteiltool 32 zugeführt, wobei das zweite Konfigurationsteiltool 32 vorab definierte Validierungsregeln aufweist, und wobei durch die Validierungsregeln die Zielparameter 9 (FIG 1) validierbar ist. Hier wird daher die erstellte Zielkonfiguration validiert. Um inkonsistente oder gefährliche Kombinationen für Güter und Menschen von Maschinenkonfiguration zu vermeiden, muss das generierte Ergebnis validiert werden. Dieser Schritt bedarf detaillierter Validierungsregeln, die zuvor festgelegt werden. An diesem Punkt wird durch Modelle und Simulationen der Nachweis erbracht, dass z.B. Anlagensicherheit gewährleistet ist. Hier spielen Normen und Richtlinien der jeweiligen Anlagenbetreiber eine Rolle.

Nun muss diese Zielkonfiguration auf die Zielanlage geladen werden. Hierzu wird eine Netzwerk-Infrastruktur vorausgesetzt, nämlich eine Konfigurationsverbindung 33 über die eine sichere und geschützte Kommunikation mit der Zielanlage möglich ist. Das hier vorgeschlagene System muss aber in der Lage sein, die maschinenspezifischen Protokolle und Daten-Austauschformate zu adaptieren.

Anschließend erfolgt eine Bestätigung 34 durch die Zielanlage bzw. derjenigen Geräte, die die neuen Zielparameter 9 (FIG 1) nun aufweisen. Durch eine Bestätigungsverbindung wird die Bestätigung 34 der Übernahme der Zielparameter 9 (FIG 1) durch die Zielanlage gesendet. D.h., nach Übernahme der neuen Konfiguration bestätigt die Zielanlage den Vorgang in einer Art, dass sicher überprüft werden kann, dass die geplante Änderung erfolgreich stattgefunden hat und auf dem Weg nicht verändert wurde. Ist alles OK, fließt die neue Konfiguration zurück in das Anlagenmodell 21. Damit ist die Anlage auf dem neusten Stand.

Durch die Erfindung ist es möglich, die aus den BigData-Analysen gewonnenen Erkenntnisse zur Optimierung bereits installierter Geräte und Systeme im Feld zu nutzen, ohne Geräte vor Ort austauschen zu müssen oder lange manuelle Prozesse in Kauf nehmen zu müssen.

## Patentansprüche

1. System zum Steuern, Überwachen und Regeln von Prozessen in industriellen Anlagen,
**dadurch gekennzeichnet, dass** eine geschlossene Rückkopplungsschleife (11) vorgesehen ist, umfassend:
- eine automatisiert konfigurierbare, zentrale Datenerfassung (1) zur Erfassung der auf Kundenseite, von den industriellen Anlagen erzeugten Betriebsparameter im Feld,
- eine erste Kommunikationsverbindung (2) vom Feld zu einer zentralen Datenauswertungseinheit (3) zur Übersendung der Daten,
- in der zentralen Datenauswertungseinheit (3) zumindest eine zentralisierte Daten-Sammlungseinheit, insbesondere eine BigData-Sammlungseinheit (4) und/oder zumindest ein statistisches Datenauswertungsmodul (5),
- zumindest ein Generierungsmodul (6) in der zentralen Datenauswertungseinheit (3) zur Generierung von Ergebnissen (7), insbesondere für die Anlagenoptimierung / Prozesserweiterung und /oder Optimierung notwendiger Wartungsarbeiten,
- zumindest ein Erstellungsmodul (8) in der zentralen Datenauswertungseinheit (3) zum Erstellen von neuen Zielparametern (9) durch automatisierte Anpassung der Betriebsparameter auf Basis der Ergebnisse (7),
- eine zweite Kommunikationsverbindung (10) von der zentralen Datenauswertung (3) zurück ins Feld zur Übersendung und Einstellung der industriellen Anlagen durch die Zielparameter (9).

2. System zum Steuern, Überwachen und Regeln von Prozessen nach Anspruch 1,
**dadurch gekennzeichnet, dass** die Datenerfassung (1) eine Datenvorverdichtung umfasst.

3. System zum Steuern, Überwachen und Regeln von Prozessen nach einem der vorhergehenden Ansprüche,
**dadurch gekennzeichnet, dass** die Datenerfassung (1) eine Datenfilterung umfasst.

4. System zum Steuern, Überwachen und Regeln von Prozessen nach einem der vorhergehenden Ansprüche,
**dadurch gekennzeichnet, dass** die erste Kommunikationsverbindung (2) beim Kunden, insbesondere beim Kunden vor Ort oder über das Internet vorgesehen ist.

5. System zum Steuern, Überwachen und Regeln von Prozessen nach einem der vorhergehenden Ansprüche,
**dadurch gekennzeichnet, dass** das Erstellungsmodul (8) ein Entscheidungstool (20) umfasst, durch welche eine erste Entscheidung (22) über eine automatisierte oder manuelle Erzeugung von Aufträgen von Wartungsarbeiten oder eine zweite Entscheidung (23) über eine automatisierte oder manuelle Erzeugung von geänderten Zielparametern (9) generierbar ist und wobei dem Entscheidungstool (20) ein Wartungstool (24) und ein Konfigurationstool (25) nachgeschaltet ist, wobei dem Wartungstool (24) die erste Entscheidung (22) zuführbar ist und dem Konfigurationstool (25) die zweite Entscheidung (23) zuführbar ist.

6. System zum Steuern, Überwachen und Regeln von Prozessen nach Anspruch 5,
**dadurch gekennzeichnet, dass** ein Anlagenmodell (21) zur automatisierten oder manuellen Erzeugung der geänderten Zielparameter (9) vorgesehen ist.

7. System zum Steuern, Überwachen und Regeln von Prozessen nach Anspruch 5 oder 6,
**dadurch gekennzeichnet, dass** das Wartungstool (24) zumindest ein erstes Wartungsteiltool (26) umfasst, in dem die Wartungsaufträge generierbar sind, und ein dem ersten Wartungsteiltool (26) nachgeschaltetes zweites Wartungsteiltool (27), in dem die Wartungsaufträge planbar und beauftragbar sind.

8. System zum Steuern, Überwachen und Regeln von Prozessen nach Anspruch 5,6 oder 7,
**dadurch gekennzeichnet, dass** das Konfigurationstool (25) zumindest eine Generierungsvorschrift (30) für die in der industriellen Anlage vorgesehenen Anlagenmaschinen umfasst.

9. System zum Steuern, Überwachen und Regeln von Prozessen nach Anspruch 8,
**dadurch gekennzeichnet, dass** das Konfigurationstool (25) zumindest ein erstes Konfigurationsteiltool (31) umfasst, durch welches unter Verwendung der Generierungsvorschriften (30) die Zielparameter (9) generierbar ist.

10. System zum Steuern, Überwachen und Regeln von Prozessen nach Anspruch 9,
**dadurch gekennzeichnet, dass** das Konfigurationstool (25) ein zweites Konfigurationsteiltool (32) umfasst, wobei das zweite Konfigurationsteiltool (32) vorab definierte Validierungsregeln aufweist, und wobei durch die Validierungsregeln die Zielparameter (9) validierbar sind.

11. System zum Steuern, Überwachen und Regeln von Prozessen nach Anspruch 10,
**dadurch gekennzeichnet, dass** das Konfigurationstool (25) eine Konfigurationsverbindung (33) aufweist, wodurch die Zielparameter (9) in eine jeweilige Zielanlage ladbar ist.

12. System zum Steuern, Überwachen und Regeln von Prozessen nach Anspruch 11,
**dadurch gekennzeichnet, dass** durch eine Bestätigungsverbindung eine Bestätigung (34) der Übernahme der Zielparameter (9) durch die Zielanlage sendbar ist.

13. Verfahren zum Betrieb eines Systems zum Steuern, Überwachen und Regeln von Prozessen in industriellen Anlagen
**gekennzeichnet, durch** eine geschlossene Rückkopplungsschleife (11) mit den folgenden Schritten:
- Erfassung von Daten **durch** eine automatisiert konfigurierbare, zentrale Datenerfassung (3) der auf Kundenseite, von den industriellen Anlagen, erzeugten Betriebsparameter im Feld,
- Verbinden vom Feld zu einer zentralen Datenauswertungseinheit (3) **durch** eine erste Kommunikationsverbindung (2) zur Übersendung der Daten,
- Sammeln und auswerten der Daten in der zentralen Datenauswertungseinheit (3) **durch** zumindest eine zentralisierte Daten-Sammlungseinheit, insbesondere eine BigData-Sammlungseinheit (4), und/oder zumindest ein statistisches Datenauswertungsmodul (5),
- Generieren von Ergebnissen (7), insbesondere für die Anlagenoptimierung/Prozesserweiterung und/oder Optimierung notwendiger Wartungsarbeiten, **durch** zumindest ein Generierungstool (7) in der zentralen Datenauswertungseinheit (3),
- Erstellen von neuen Zielparametern (9) **durch** automatisierte Anpassung der Betriebsparameter auf Basis der Ergebnisse (7) **durch** zumindest ein Erstellungsmodul (8) in der zentralen Datenauswertungseinheit (3),
- Übersenden der Zielparameter (9) **durch** eine zweite Kommunikationsverbindung (10) von der zentralen Datenauswertung (3) zurück ins Feld und Einstellen der industriellen Anlagen anhand der Zielparameter (9).

14. Verfahren zum Betrieb eines Systems zum Steuern, Überwachen und Regeln von Prozessen nach Anspruch 13,
**dadurch gekennzeichnet, dass** das Erstellungsmodul (8) ein Entscheidungstool (20) umfasst, durch welche eine erste Entscheidung (22) über eine automatisierte oder manuelle Erzeugung von Aufträgen von Wartungsarbeiten oder eine zweite Entscheidung (23) über eine automatisierte oder manuelle Erzeugung von geänderten Zielparametern (9) generiert wird und wobei dem Entscheidungstool (20) ein Wartungstool (24) und ein Konfigurationstool (25) nachgeschaltet wird, wobei dem Wartungstool (24) die erste Entscheidung (22) zugeführt wird und dem Konfigurationstool (25) die zweite Entscheidung (23) zugeführt wird.

15. Verfahren zum Betrieb eines Systems zum Steuern, Überwachen und Regeln von Prozessen nach Anspruch 14,
**dadurch gekennzeichnet, dass** das Wartungstool (24) zumindest ein erstes Wartungsteiltool (26) umfasst, in dem Wartungsaufträge generiert werden, und ein dem ersten Wartungsteiltool (26) nachgeschaltetes zweites Wartungsteiltool (27), in dem die Wartungsaufträge geplant und beauftragt werden.

16. System zum Steuern, Überwachen und Regeln von Prozessen nach Anspruch 14 oder 15,
**dadurch gekennzeichnet, dass** das Konfigurationstool (25) zumindest ein erstes Konfigurationsteiltool (31) umfasst, durch welches unter Verwendung einer Generierungsvorschriften (30) die Zielparameter (9) generiert werden.

17. System zum Steuern, Überwachen und Regeln von Prozessen nach Anspruch 16,
**dadurch gekennzeichnet, dass** das Konfigurationstool (25) ein zweites Konfigurationsteiltool (32) umfasst, wobei das zweite Konfigurationsteiltool (32) vorab definierte Validierungsregeln aufweist, und wobei durch die Validierungsregeln die Zielparameter (9) validiert werden.

18. System zum Steuern, Überwachen und Regeln von Prozessen nach Anspruch 17,
**dadurch gekennzeichnet, dass** das Konfigurationstool (25) eine Konfigurationsverbindung (33) aufweist, wodurch die Zielparameter (9) in eine jeweiligen Zielanlagen geladen werden und wobei anschließend durch eine Bestätigungsverbindung eine Bestätigung (34) der Übernahme der Zielparameter (9) durch die Zielanlage gesendet wird.
